# FASCICULE DE BREVET EUROPEEN

(11) **EP 2 097 623 B1**
(45) Date de publication et mention de la délivrance du brevet: **29.09.2010**
(21) Numéro de dépôt: 07847682.7
(22) Date de dépôt: 03.12.2007
(51) Int. Cl.: F01N 3/08, F01N 11/00, F02D 41/02

(54) **PROCEDE DE DIAGNOSTIC D'EMPOISONNEMENT D'UN PIEGE A OXYDES D'AZOTE**
VERFAHREN ZUR DIAGNOSE, DASS EINE STICKOXIDFALLE VERGIFTET WORDEN IST
METHOD FOR DIAGNOSING THAT A NITROGEN OXIDES TRAP HAS BEEN POISONED

(30) Priorité: 04.12.2006 FR 0610556
(43) Date de publication de la demande: 09.09.2009
(73) Titulaire: Renault SAS, 92100 Boulogne Billancourt (FR)
(72) Inventeur: LYNCH, Charlotte, 75012 Paris (FR); BOURRET, Stéphane, Corbreuse 91410 (FR)
(86) Numéro de dépôt international: PCT/EP2007/063171
(87) Numéro de publication internationale: WO 2008/068226

(56) Documents cités:
- EP-A- 1 568 863
- EP-A2- 1 174 600
- EP-A2- 1 191 196
- DE-A1- 10 156 476
- FR-A- 2 856 733

## Description

L'invention concerne un procédé de commande d'un moteur de véhicule.

L'invention concerne plus précisément un procédé pour diagnostiquer l'état d'un piège à oxydes d'azote, en particulier son empoisonnement au soufre.

Pour diagnostiquer l'état de fonctionnement d'un piège à oxydes d'azote, on connaît des procédés de commande permettant de connaître la capacité d'adsorption des oxydes d'azotes dans le piège. De tels diagnostics sont notamment utiles pour savoir si le piège à oxydes d'azote doit être changé, afin de respecter les normes environnementales.

Toutefois, avec ce type de diagnostic, on n'est pas en mesure de distinguer le vieillissement normal du piège de son empoisonnement par du soufre qui prend la place, sur les sites d'adsorption du piège, des oxydes d'azote qu'on souhaite régénérer.

En conséquence, ce type de diagnostic mène de façon anticipée à la conclusion d'un vieillissement du piège et donc d'un changement de celui-ci, alors qu'il peut en réalité encore fonctionner parfaitement. Or un tel changement est particulièrement coûteux pour le conducteur du véhicule.

Aussi, on a proposé des procédés permettant de faire la distinction entre le vieillissement, irréversible, du piège à oxydes d'azote, d'une part et son empoisonnement, quant à lui réversible, par le soufre, d'autre part.

Une fois le diagnostic réalisé et si l'empoisonnement au soufre est ainsi déterminé, on met alors en place un procédé de purge de ceux-ci. Cependant, de tels procédés de purge ne sont pas sans conséquence pour le vieillissement du piège, car la purge du soufre nécessite des températures élevées.

Il est donc nécessaire de maîtriser la purge du soufre (durée, fréquence,...), et donc de n'opérer celle-ci que sous certaines conditions, pour que cette purge ne soit pas contre-productive, c'est-à-dire qu'elle ne provoque pas elle-même un vieillissement anticipé du piège, voire un endommagement du moteur par dilution de carburant dans l'huile.

Il est ainsi proposé dans le document EP 1568863 un procédé de diagnostic dans lequel on commande un déstockage de soufre du piège sous la condition qu'une durée atteigne une durée seuil.

Plus précisément, ce document définit cette durée comme étant la durée nécessaire pour qu'une sonde disposée en aval du piège détecte une quantité d'oxygène seuil dans les gaz d'échappement depuis le commencement d'une phase de régénération (réduction) des oxydes d'azote. Si cette durée dépasse la durée seuil, le piège est jugé comme présentant une faible capacité de stockage, te une purge du soufre est alors envisagée.

Le diagnostic, sur l'utilité de faire une purge des oxydes de soufre, consiste donc à mettre en oeuvre cette durée seuil.

Toutefois, le demandeur a pu constater qu'il était possible d'améliorer la durée de vie d'un piège à oxydes d'azote. Par durée de vie, on entend le temps écoulé entre la mise en service du piège et la date à laquelle un diagnostic indique qu'il doit être changé.

On connaît par ailleurs des documents EP 1 568 863, EP 1 174 600 et DE 101 56 476 un véhicule comprenant un piège à oxydes d'azote et des moyens de mesure de la capacité d'oxydation de ce piège ou de la quantité de souffre retenu dans ce piège. Ces moyens de mesure Permettent ainsi d'approximer l'ampleur de l'empoisonnement au souffre du piège à oxydes d'azote afin de déclencher, si nécessaire, le destockage du souffre au cours d'une opération dommageable pour le piège à oxydes d'azote.

Toutefois, le demandeur a ici également pu constater qu'il était possible d'améliorer la durée de vie du piège a oxydes d'azote. Un objectif de l'invention est donc d'améliorer les procédés existants, en vue d'augmenter la durée de vie d'un piège à oxydes d'azote.

Un autre objectif de l'invention est de proposer un procédé pour diagnostiquer l'état d'un piège à oxydes d'azote, en particulier son empoisonnement au soufre.

Un autre objectif de l'invention est d'optimiser les conditions d'application d'une purge du soufre contenu dans le piège.

Pour atteindre l'un au moins de ces objectifs, il est prévu dans le cadre de l'invention un procédé de commande d'un moteur de véhicule, caractérisé en ce qu'on effectue un diagnostic d'empoisonnement au soufre d'un piège à oxyde d'azote si l'une au moins des conditions de purge du soufre suivantes est remplie :
- une distance parcourue par le véhicule, depuis la mise en fonctionnement du piège, est inférieure à une valeur prédéterminée B ;
- une quantité de purges des oxydes d'azote contenus dans le piège, effectuée depuis la mise en fonctionnement du piège, est inférieure à une valeur prédéterminée C ;
- le temps passé en purge du soufre contenu dans le piège, depuis la mise en fonctionnement du piège, est inférieur à une valeur prédéterminée D.

Le procédé selon l'invention pourra en outre présenter au moins l'une des caractéristiques suivantes :
- on effectue le diagnostic d'empoisonnement au soufre du piège à oxydes d'azote si l'une au moins des conditions supplémentaires suivantes est remplie :
   - la distance parcourue par le véhicule, depuis une dernière purge du soufre du piège, est supérieure à une valeur prédéterminée A,
   - la quantité de purges du soufre contenu dans le piège, depuis l'allumage d'un moyen d'information d'une panne du piège, est inférieure à une valeur prédéterminée E,
   - la masse de soufre chargée dans le piège est supérieure à une valeur prédéterminée F ;
- on effectue le diagnostic d'empoisonnement au soufre du piège à oxydes d'azote, si une panne du piège à oxydes d'azote a été préalablement diagnostiquée selon le critère prédéterminé, diagnostic
dont le conducteur du véhicule est informé par les moyens d'information de la panne ;
- on diagnostique la panne du piège à oxyde d'azote, si le critère prédéterminé n'est pas satisfait N fois à l'issue de N régénérations des oxydes d'azote contenus dans le piège ;
- si les conditions de purge du soufre sont remplies, on requiert la purge du soufre contenu dans le piège ;
- si les conditions de purge du soufre sont remplies, on effectue la purge du soufre contenu dans le piège ;
- on détermine si la purge du soufre effectuée permet au piège à oxydes d'azote de satisfaire au critère prédéterminé ;
- si la purge du soufre ne permet pas au piège de satisfaire au critère prédéterminé, alors on détermine à nouveau si les conditions de purge du soufre sont remplies ;
- si la purge du soufre permet au piège de satisfaire le critère prédéterminé, on incrémente cette donnée dans une comptabilisation de la quantité N de fois où le critère prédéterminé est satisfait, à l'issue de N régénérations des oxydes d'azote contenus dans le piège ;
- si les conditions de purge du soufre ne sont pas remplies, on effectue une mise en attente d'une prochaine requête de régénération des oxydes d'azote, le piège étant alors considéré comme vieilli.

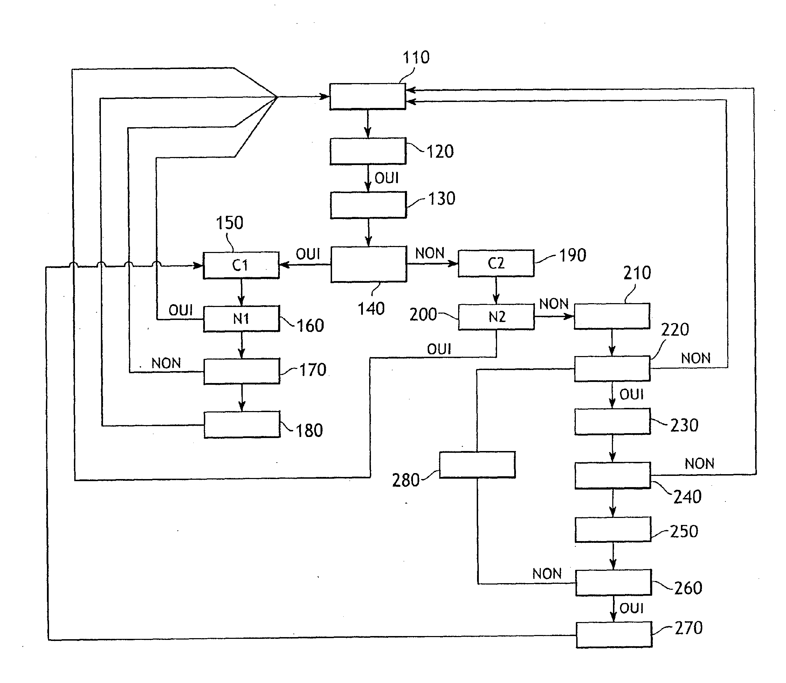

D'autres caractéristiques, buts et avantages de la présente invention apparaîtront à la lecture de la description détaillée qui va suivre, et en regard du dessin annexé, donné à titre d'exemple non limitatifs et sur lequel :
- la figure représente un synoptique du fonctionnement d'un procédé de commande d'un moteur de véhicule selon l'invention.

Lorsqu'une régénération des oxydes d'azote contenus dans le piège à oxydes d'azote a été réalisée (étape 120), un critère à remplir est calculé (étape 130) puis comparé à un critère prédéterminé par les normes environnementales (critère OBD, étape 140).

Si le critère calculé est en accord avec le critère prédéterminé (OBD), alors on comptabilise cette information dans un compteur C1 (étape 150) et on le compare à une valeur N1 (nombre entier positif) et on remet à zéro un compteur C2.

Si le compteur C1 indique une valeur strictement inférieure à N1 (étape 160), alors le procédé s'arrête, c'est-à-dire qu'une mise en attente d'une prochaine requête de régénération des oxydes d'azote est effectuée (étape 110), afin de tester à nouveau l'état du piège.

En revanche, si le compteur indique une valeur égale ou supérieure à N, alors on vérifie si des moyens d'information du conducteur du véhicule sur l'état « vieilli » du piège à oxydes d'azote sont allumés (MIL, étape 170).

Si ces moyens d'information du conducteur sont allumés, alors on éteint ceux-ci (étape 180) et on revient en position d'attente d'une prochaine requête de régénération des oxydes d'azote (étape 110). Dans ce cas, on considère que le diagnostic est effectué et que le piège à oxydes d'azote est en parfait état de fonctionnement.

Au contraire, si ces moyens d'information du conducteur ne sont pas allumés, alors on revient directement en position d'attente d'une prochaine requête de régénération des oxydes d'azote (étape 110). Là également, on considère que le diagnostic est effectué et que le piège à oxydes d'azote est en parfait état de fonctionnement.

Si le critère calculé n'est pas en accord avec le critère prédéterminé (OBD, étape 140), alors on effectue le diagnostic d'empoisonnement au soufre du piège à oxydes d'azote (étapes 190, 200, 210, 220, 230, 240, 250, 260, 270).

Plus précisément, si le critère calculé n'est pas en accord avec le critère prédéterminé, alors on comptabilise cette information dans le compteur C2 (étape 190), on le compare à une valeur N2 (nombre entier positif), et on remet le compteur C1 à la valeur zéro.

Si le compteur C2 indique une valeur strictement inférieure à N2 (étape 200), alors le procédé s'arrête, c'est-à-dire qu'une mise en attente d'une prochaine requête de régénération des oxydes d'azote est effectuée (étape 110), afin de tester à nouveau l'état du piège.

En revanche, si cet autre compteur indique une valeur égale ou supérieure à N2, alors on allume les moyens d'information du conducteur du véhicule sur l'état « vieilli » du piège à oxydes d'azote (allumage MIL, étape 210).

A cette étape 210, le conducteur est donc informé d'un dysfonctionnement (encore appelé panne) du piège à oxydes d'azote, sans savoir s'il s'agit d'un vieillissement de celui-ci ou si la purge du soufre peut permettre à nouveau un fonctionnement normal, c'est-à-dire dans lequel le critère prédéterminé est rempli.

Les conditions dans lesquelles une telle purge du soufre empoisonnant le piège pourrait advenir sont alors déterminées (étape 220).

Plus précisément, on effectue un diagnostic d'empoisonnement au soufre du piège à oxyde d'azote (NOx) si l'une au moins des conditions de purge du soufre suivantes sont remplies :
- la distance parcourue par le véhicule, depuis la mise en fonctionnement du piège, est inférieure à une valeur prédéterminée B ;
- la quantité de purges (régénération) des oxydes d'azote contenus dans le piège, effectuée depuis la mise en fonctionnement du piège, est inférieure à une valeur prédéterminée C ;
- le temps passé en purge du soufre contenus dans le piège, depuis la mise en fonctionnement du piège, est inférieur à une valeur prédéterminée D.

Avantageusement, on prend en compte plusieurs des dernières valeurs de ce critère, par exemple les 20 dernières.

On notera également que les premières conditions ci-dessus (seuils B, C, D) permettent d'avoir une idée du vieillissement du piège à oxydes d'azote. En effet, si ces seuils sont dépassés, le piège à oxydes d'azote est considéré comme vieilli, et on estime que le gain d'efficacité dû à une purge du soufre contenu dans le piège ne sera pas intéressant à effectuer.

Il peut être intéressant de prendre également en compte l'une au moins des conditions suivantes :
- la distance parcourue par le véhicule, depuis une dernière purge du soufre du piège, est supérieure à une valeur prédéterminée A ;
- la quantité de purges du soufre contenu dans le piège, depuis l'allumage d'un moyen d'information d'une panne du piège, est inférieure à une valeur prédéterminée E ;
- la masse de soufre chargée dans le piège est supérieure à une valeur prédéterminée F ;

On notera ces autres conditions (seuils A, E et F) ci-dessus permettent de s'affranchir des problèmes liés à l'utilisation de « mauvais carburant. Par « mauvais carburant, on entend par exemple des carburants diesel pouvant contenir jusqu'à 350ppm de soufre, ce qui est parfois le cas dans certains pays où la législation nationale n'est pas restrictive. (Typiquement, on trouve par exemple en France des carburants diesel comportant 10ppm de soufre).

Si les conditions ci-dessus ne sont pas remplies, alors le procédé s'arrête, c'est-à-dire qu'une mise en attente d'une prochaine requête de régénération des oxydes d'azote est effectuée (étape 110). En effet, dans ce cas, on estime qu'une purge du soufre contenu dans le piège n'est pas nécessaire (diagnostic d'empoisonnement au soufre), les moyens d'information de panne restent allumés et le piège est jugé comme étant effectivement vieilli. Le diagnostic est donc que le piège doit être changé.

Au contraire, si ces conditions sont remplies, alors on effectue une requête (étape 230) pour lancer la purge du soufre contenu dans le piège (étape 240).

Si la purge du soufre contenu dans le piège n'est pas effective, alors le procédé s'arrête, c'est-à-dire qu'une mise en attente d'une prochaine requête de régénération des oxydes d'azote est effectuée (étape 110).

Au contraire, si la purge du soufre contenu dans le piège est effective, alors, de manière analogue à ce qui est effectué à l'issue de la régénération des oxydes d'azote, on calcule un critère (étape 250) qu'on compare au critère prédéterminé (toujours le critère OBD, étape 260).

Si le critère prédéterminé est rempli, alors cela signifie que le piège à oxydes d'azote a été « réparé ». Le compteur C1 est alors incrémenté, alors que le compteur C2 est remis à zéro (étape 150). Le compteur C1 est ensuite comparé à la valeur N1 (étape 160), et le moyen d'information de panne est éteint si C1 est supérieur ou égal à N1, informant le conducteur de l'état en fait non vieilli du piège.

Au contraire, si le critère prédéterminé n'est pas rempli, on comprend que la purge du soufre n'a pas permis une réparation du piège à oxydes d'azote (étape 280). Dans ce cas, on réinjecte cette information au niveau des conditions de requête d'une purge de soufre (étape 220).

En effet, si le critère prédéterminé n'est pas rempli, cela signifie soit que la purge du soufre est insuffisante et qu'il faut recommencer pour la compléter, soit que le piège à oxydes d'azote est effectivement vieilli.

Ainsi, si les conditions d'une nouvelle purge sont remplies, on effectuera à nouveau au moins les étapes 230 et 240, pour purger plus de soufre. Et si les conditions de cette nouvelle purge ne sont pas remplies, alors le procédé s'arrête, c'est-à-dire qu'une mise en attente d'une prochaine requête de régénération des oxydes d'azote est effectuée (étape 110). Dans ce cas, les moyens d'information de panne du piège restent allumés et le piège est jugé comme étant effectivement vieilli. Il doit donc être changé.

On donne ci-dessous un exemple fourni à titre d'exemple non limitatif de l'invention, des valeurs prédéterminées A, B, C, D, E, F et G sur les conditions de purge au soufre du piège à oxydes d'azote.

A = 200km, B = 100 000km, C = 20 000, D = 1000 mn, E = 2 et F= 1 gramme.

Bien entendu, on comprend que ces valeurs seront adaptées au type de véhicule sur lequel le piège sera installé.

L'intérêt de mettre en place des compteurs avec des valeurs N1 et N2 (étapes 160, 200) réside dans le fait qu'on vérifie plusieurs fois si le critère calculé est en accord ou pas avec le critère prédéterminé, et ce afin de minimiser les erreurs de diagnostic. Cela est particulièrement intéressant dans l'hypothèse où on se situe à proximité de la limite fixée par le critère prédéterminé (OBD, étape 140).

De préférence, les valeurs N1 et N2 sont identiques et la valeur N en résultant sera le plus souvent prise égale à N = N1 = N2 = 3.

On notera que la stratégie employée dans l'invention n'augmente pas la dilution de manière démesurée et limite donc les risques de casse moteur. Plus encore, le demandeur considère que cette stratégie, compte tenu des conditions d'application restrictives de la purge employées dans le procédé de diagnostic du piège, limite ces risques et augment nettement la durée de vie du piège à oxydes d'azote tout en lui conservant une efficacité apte à respecter les normes environnementales.

## Revendications

1. Procédé de commande d'un moteur de véhicule dans lequel on calcule (130) un critère à remplir, on compare ce critère calcule avec un critère prédéterminer pour déterminer (140), si un piège à oxydes d'azote est en panne, **caractérisé en ce que**, si la panne est diagnostiquée, on requiert (230) une purge du soufre contenu dans un piège à oxyde d'azote (NOx) dans l'une au moins des conditions suivantes (220) :
- une distance parcourue par le véhicule, depuis la mise en fonctionnement du piège, est inférieure à une valeur prédéterminée B ;
- une quantité de purges des oxydes d'azote contenus dans le piège, effectuée depuis la mise en fonctionnement du piège, est inférieure à une valeur prédéterminée C ;
- le temps passé en purge du soufre contenu dans le piège, depuis la mise en fonctionnement du piège, est inférieur à une valeur prédéterminée D.

2. Procédé selon la revendication 1, **caractérisé en ce qu'**on requiert (230) une purge du soufre contenu dans le piège à oxydes d'azote si l'une au moins des conditions supplémentaires suivantes est remplie :
- la distance parcourue par le véhicule, depuis une dernière purge du soufre du piège, est supérieure à une valeur prédéterminée A ;
- la quantité de purges du soufre contenu dans le piège, depuis l'allumage d'un moyen d'information d'une panne du piège, est inférieure à une valeur prédéterminée E ;
- la masse de soufre chargée dans le piège est supérieure à une valeur prédéterminée F.

3. Procédé selon l'une des revendications précédentes, **caractérisé en ce que**, si la panne est diagnostiquée, le conducteur du véhicule est informé (210) par les moyens d'information de la panne.

4. Procédé selon la revendication précédente, **caractérisé en ce qu'**on diagnostique la panne du piège à oxyde d'azote, si le critère prédéterminé n'est pas satisfait N fois (200) à l'issue de N régénérations des oxydes d'azote contenus dans le piège (120).

5. Procédé selon l'une des revendications précédentes, **caractérisé en ce que** si l'une des conditions de purge du soufre est remplie, on effectue (240) la purge du soufre contenu dans le piège.

6. Procédé selon la revendication précédente, **caractérisé en ce qu'**on détermine (260) si la purge du soufre effectuée permet au piège à oxydes d'azote de satisfaire au critère prédéterminé.

7. Procédé selon la revendication précédente, **caractérisé en ce que** si la purge du soufre ne permet pas au piège de satisfaire au critère prédéterminé, alors on détermine (280, 220) à nouveau si les conditions de purge du soufre sont remplies.

8. Procédé selon la revendication 6, **caractérisé en ce que** si la purge du soufre permet au piège de satisfaire le critère prédéterminé, on incrémente cette donnée dans une comptabilisation (150) de la quantité N de fois où le critère prédéterminé est satisfait, à l'issue de N régénérations des oxydes d'azote contenus dans le piège (120).

9. Procédé selon l'une des revendications précédentes, **caractérisé en ce que** si les conditions de purge du soufre (220) ne sont pas remplies, on effectue une mise en attente d'une prochaine requête de régénération des oxydes d'azote (110), le piège étant alors considéré comme vieilli.

## Claims

1. Method of controlling a vehicle engine in which a criterion that has to be met is calculated (130), this calculated criterion is compared against a preset criterion in order to determine (140) whether a nitrogen oxides trap is faulty, **characterized in that**, if the fault is diagnosed, the sulphur contained in a nitrogen oxide (NOx) trap is required (230) to be purged under at least one of the following conditions (220):
- a distance covered by the vehicle since the trap entered service is below a preset value B;
- an amount of purging of the nitrogen oxides contained in the trap, performed since the trap entered service, is below a preset value C;
- the time spent purging the sulphur contained in the trap since the trap entered service is below a preset value D.

2. Method according to Claim 1, **characterized in that** a purging of the sulphur contained in the nitrogen oxides trap is required (230) if at least one of the following additional conditions is met:
- the distance covered by the vehicle since a last purging of the sulphur from the trap is above a preset value A;
- the amount of purging of the sulphur contained in the trap since a trap fault indicating means lit up is below a preset value E;
- the mass of sulphur with which the trap is filled is above a preset value F.

3. Method according to one of the preceding claims, **characterized in that**, if the fault is diagnosed, the driver of the vehicle is informed (210) by the fault indicating means.

4. Method according to the preceding claim, **characterized in that** the fault with the nitrogen oxide trap is diagnosed if the preset criterion is not met N times (200) after N regenerations of the nitrogen oxides contained in the trap (120).

5. Method according to one of the preceding claims, **characterized in that** if one of the sulphur purging conditions is met, the sulphur contained in the trap is purged (240).

6. Method according to the preceding claim, **characterized in that** this method determines (260) whether the sulphur purging performed allows the nitrogen oxides trap to meet the preset criterion.

7. Method according to the preceding claim, **characterized in that** if the purging of the sulphur does not allow the trap to meet the preset criterion then the method once again determines (280, 220) whether the sulphur purging conditions have been met.

8. Method according to Claim 6, **characterized in that** if the purging of the sulphur does allow the trap to meet the preset criterion then this data item is incremented in a count (150) of the amount N of times that the preset criterion has been met, after N regenerations of the nitrogen oxides contained in the trap (120).

9. Method according to one of the preceding claims, **characterized in that** if the sulphur purging conditions (220) are not met then the system is placed on standby awaiting the next nitrogen oxides regeneration request (110), the trap then being considered to have aged.

## Patentansprüche

1. Verfahren zur Steuerung eines Fahrzeugmotors, bei dem ein zu erfüllendes Kriterium berechnet wird (130), dieses berechnete Kriterium mit einem vorbestimmten Kriterium verglichen wird, um zu bestimmen (140), ob eine Stickoxidfalle ausgefallen ist, **dadurch gekennzeichnet, dass**, wenn der Ausfall diagnostiziert wird, ein Entleeren des in einer Stickoxidfalle (NOx) enthaltenen Schwefels unter mindestens einer der folgenden Bedingungen (220) gefordert wird (230):
- eine vom Fahrzeug seit der Inbetriebnahme der Falle gefahrene Strecke liegt unter einem vorbestimmten Wert B;
- eine Anzahl von Entleerungen der in der Falle enthaltenen Stickoxide, die seit der Inbetriebnahme der Falle durchgeführt wurde, liegt unter einem vorbestimmten Wert C;
- die seit der Inbetriebnahme der Falle mit der Entleerung des in der Falle enthaltenen Schwefels verbrachte Zeit liegt unter einem vorbestimmten Wert D.

2. Verfahren nach Anspruch 1, **dadurch gekennzeichnet, dass** eine Entleerung des in der Stickoxidfalle enthaltenen Schwefels gefordert wird (230), wenn mindestens eine der folgenden zusätzlichen Bedingungen erfüllt ist:
- die vom Fahrzeug seit einer letzten Entleerung des Schwefels aus der Falle zurückgelegte Strecke liegt über einem vorbestimmten Wert A;
- die Anzahl von Entleerungen des in der Falle enthaltenen Schwefels seit dem Aufleuchten einer Einrichtung zur Anzeige eines Ausfalls der Falle liegt unter einem vorbestimmten Wert E;
- die Masse von in die Falle geladenem Schwefel liegt über einem vorbestimmten Wert F.

3. Verfahren nach einem der vorhergehenden Ansprüche, **dadurch gekennzeichnet, dass**, wenn der Ausfall diagnostiziert wird, der Fahrer des Fahrzeugs von den Einrichtungen zur Anzeige des Ausfalls informiert wird (210).

4. Verfahren nach dem vorhergehenden Anspruch, **dadurch gekennzeichnet, dass** der Ausfall der Stickoxidfalle diagnostiziert wird, wenn das vorbestimmte Kriterium nach N Regenerierungen der in der Falle enthaltenen Stickoxide (120) N Mal nicht erfüllt wird (200).

5. Verfahren nach einem der vorhergehenden Ansprüche, **dadurch gekennzeichnet, dass**, wenn eine der Entleerungsbedingungen des Schwefels erfüllt ist, das Entleeren des in der Falle enthaltenen Schwefels durchgeführt wird (240).

6. Verfahren nach dem vorhergehenden Anspruch, **dadurch gekennzeichnet, dass** bestimmt wird (260), ob die durchgeführte Entleerung des Schwefels es der Stickoxidfalle erlaubt, das vorbestimmte Kriterium zu erfüllen.

7. Verfahren nach dem vorhergehenden Anspruch, **dadurch gekennzeichnet, dass**, wenn die Entleerung des Schwefels es der Falle nicht erlaubt, das vorbestimmte Kriterium zu erfüllen, erneut bestimmt wird (280, 220), ob die Entleerungsbedingungen des Schwefels erfüllt sind.

8. Verfahren nach Anspruch 6, **dadurch gekennzeichnet, dass**, wenn die Entleerung des Schwefels es der Falle erlaubt, das vorbestimmte Kriterium zu erfüllen, dieser Datenwert in einer Verbuchung (150) der Anzahl N von Malen, in denen das vorbestimmte Kriterium nach N Regenerierungen der in der Falle enthaltenen Stickoxide erfüllt ist (120), inkrementiert wird.

9. Verfahren nach einem der vorhergehenden Ansprüche, **dadurch gekennzeichnet, dass**, wenn die Entleerungsbedingungen des Schwefels (220) nicht erfüllt sind, eine nächstfolgende Anforderung einer Regenerierung der Stickoxide (110) in eine Wartestellung gebracht wird, wobei die Falle dann als gealtert angesehen wird.
